# FASCICULE DE BREVET EUROPEEN

(11) **EP 3 464 893 B1**
(45) Date de publication et mention de la délivrance du brevet: **27.01.2021**
(21) Numéro de dépôt: 17731245.1
(22) Date de dépôt: 01.06.2017
(51) Int. Cl.: F03D 13/25, B63B 35/44, B63B 1/12

(54) **ÉOLIENNE FLOTTANTE**
SCHWIMMENDE WINDENERGIEANLAGE
FLOATING WIND TURBINE

(30) Priorité: 03.06.2016 FR 1655061; 23.08.2016 FR 1657872
(43) Date de publication de la demande: 10.04.2019
(73) Titulaire: DOLFINES, 78280 Guyancourt (FR)
(72) Inventeur: MICHEL, Dominique, 75008 Paris (FR); BOURDON, Jean-Claude, 78960 Voisins Le Bretonneuix (FR)
(74) Mandataire: Mazabraud, Xavier
(86) Numéro de dépôt international: PCT/FR2017/051372
(87) Numéro de publication internationale: WO 2017/207934

(56) Documents cités:
- WO-A1-2013/040871
- GB-A- 2 118 904

## Description

La présente invention se rapporte principalement au domaine des éoliennes implantées en mer. Elle se rapporte particulièrement aux éoliennes flottantes permettant d'implanter des champs d'éoliennes en haute mer, où une éolienne rigidement fixé au fond n'est pas envisageable.

Plusieurs conceptions de ce type de systèmes d'éoliennes sont connues qui permettent de développer des champs d'éoliennes. Au-delà d'une certaine profondeur d'eau trois types sont couramment proposés :
- semi-submersibles,
- SPAR, Single Point Anchor Reservoir en anglais, c'est-à-dire avec une fondation immergée à ballast stabilisé, dotée d'ancrages caténaires permettant de la fixer par simple accrochage au fond marin ; et,
- TLP, tension-leg platform en anglais, c'est-à-dire avec une plateforme à lignes tendues.

En général, ces systèmes portent une éolienne dont la partie énergétique, la turbine, est reliée au support par un mât cylindrique.

Néanmoins, à la date de l'invention, aucun champ d'éoliennes n'a été réalisé avec des éoliennes flottantes. Les seuls champs d'éoliennes en mer sont sur des supports fixes. Quelques pilotes pour les éoliennes sur supports flottants sont en cours de test.

Un système d'éolienne flottante représentant l'art antérieur est connue de WO 2013/040871 A1.

Le problème à résoudre consiste à minimiser les mouvements du flotteur, une fois celui-ci installé en mer et ce, afin de permettre un meilleur rendement. La présente invention a notamment pour but d'apporter une solution avantageuse aux mouvements statiques et dynamiques de plateforme une fois celle-ci installée en mer.

Selon l'invention, un tel système d'éolienne flottante, comprend une éolienne montée sur une plateforme flottante comprenant trois flotteurs d'axe vertical, chaque flotteur comprenant un tronçon intermédiaire de section horizontale de préférence sensiblement constante ; et, de préférence:
- un tronçon inférieur de section horizontale sensiblement constante plus grande que la section du tronçon intermédiaire ;
- un premier raccord reliant le tronçon intermédiaire au tronçon inférieur, sa section diminuant en allant, de bas en haut, du tronçon inférieur vers le tronçon intermédiaire : et :
- un tronçon supérieur de section horizontale sensiblement constante, plus grande que la section du tronçon intermédiaire ; et,
- un deuxième raccord reliant le tronçon intermédiaire au tronçon supérieur, sa section augmentant, de bas en haut, en allant du tronçon intermédiaire vers le tronçon supérieur, ce deuxième raccord étant prévu pour être disposé au-dessus du niveau de l'eau.

Un tel système est avantageusement dimensionné de sorte que, en position d'usage, la force verticale résultant de la pression d'eau sur le premier raccord est sensiblement égale à la force verticale résultant de la pression d'eau en sous-face du tronçon inférieur.

Un tel système est avantageusement dimensionné de sorte qu'une ligne de jonction entre le tronçon intermédiaire et le deuxième raccord est une ligne de flottaison pour le système.

De préférence, chaque flotteur est de révolution autour de son axe respectif. Avantageusement, les flotteurs sont sensiblement équidistants entre eux.

Les flotteurs peuvent être reliés deux à deux, dans leurs parties supérieures, par une entretoise supérieure, de préférence sensiblement horizontale. En outre, chaque entretoise supérieure peut être soutenue par deux étais, chacun des étais étant fixé par une première extrémité au voisinage du milieu de l'entretoise et, par une deuxième extrémité, au flanc d'un flotteur respectif. Les flotteurs peuvent en outre être reliés deux à deux, dans leurs parties basses, par une entretoise inférieure respective.

L'éolienne peut comprendre un pylône qui supporte une génératrice. Avantageusement, le pylône repose sur trois pieds. Il comprend de préférence trois mâts, chaque mât formant l'un desdits pieds. Ce pylône peut être un tripode en treillis triangulé comprenant trois mâts. Très avantageusement, chacun des pieds repose sensiblement au milieu d'une entretoise supérieure respective.

De préférence, l'éolienne est bipale.

Plusieurs modes d'exécution de l'invention seront décrits ci-après, à titre d'exemples non limitatifs, en référence aux dessins annexés dans lesquels :
- la figure 1 est une vue en perspective, de dessus et de trois-quarts face gauche, d'un système d'éolienne selon l'invention ;
- la figure 2 est une vue en élévation et de face, selon la direction II indiquée à la figure 3, du système d'éolienne de la figure 1 ;
- la figure 3 est une vue en élévation et de gauche, selon la direction III indiquée à la figure 2, du système d'éolienne de la figure 1 ;
- la figure 4 est une vue du détail IV indiqué à la figure 2 ; et,
- la figure 5 est une vue de dessus de la plateforme du système d'éolienne, depuis le plan de coupe V-V de la figure 2.

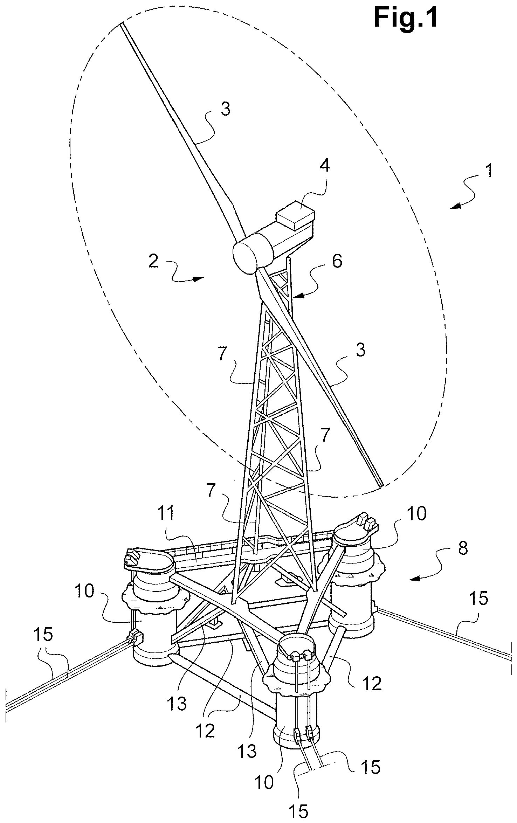

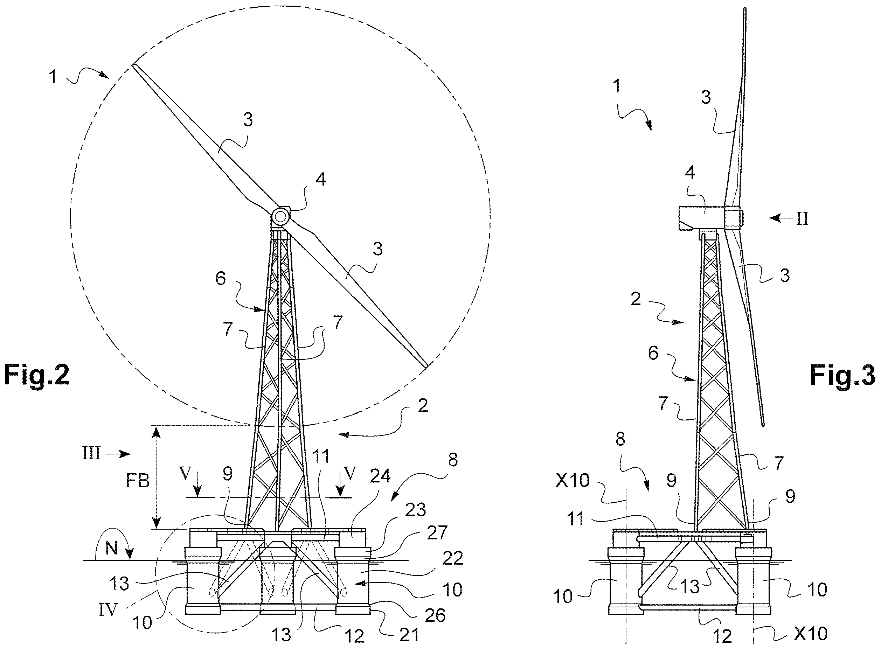

Dans description, le terme « vertical » se rapporte à une position d'équilibre du système d'éolienne, tel que représenté aux figures 1 à 4.

Les figures illustrent un système d'éolienne 1 selon l'invention. Dans l'exemple illustré, le système comprend une éolienne 2 développée par la société 2-B Energy BV. Cette éolienne est équipée de deux pales 3 fixées sur une turbine 4. Comme particulièrement illustré aux figures 1 à 3, l'éolienne comprend en outre un pylône tripode 6. Le pylône 6 est d'un type connu sous l'anglicisme « jacket », c'est-à-dire qu'il est constitué de trois mâts 7 entretoisés entre eux par une structure formant un treillis.

Le système 1 comprend en outre une plateforme flottante 8 sur laquelle l'éolienne 2 est fixée. La plateforme 8 comprend 3 flotteurs 10, sensiblement identiques entre eux et sensiblement équidistants les uns des autres. Chaque flotteur 10 a une forme générale de cylindre de révolution autour d'un axe vertical X10 respectif; sa section horizontale est variable. Les flotteurs sont rigidement reliés deux à deux par une paire entretoises sensiblement horizontales : une entretoise supérieure 11, qui relie entre elles des régions supérieures des deux flotteurs, et, une entretoise inférieure 11, qui relie entre elles des régions inférieures de ces deux flotteurs. Chaque entretoise supérieure 11 est soutenue par deux étais 13. Chaque étais est fixé par une première extrémité au voisinage du milieu de l'entretoise correspondante et au flanc d'un flotteur 10 respectif, au voisinage de sa région inférieure. A la figure 1, le niveau N de l'eau est représenté par des « collerettes » autour des flotteurs 10 et des étais 13.

Le pied 9 de chacun des mâts 7 repose sur une entretoise supérieure 11 respective, au voisinage du milieu de cette entretoise. Les étais 13 transfèrent les charges induites par l'éolienne 2 depuis les mâts jusqu'aux trois flotteurs 10. Ceci permet de partager et de renvoyer de façon harmonieuse les charges provenant du pylône sur les trois flotteurs ; ainsi, l'invention diffère notablement de l'art antérieur où un pylône cylindrique repose sur un seul flotteur.

Le système 1 comprend en outre un jeu de câbles 15 et d'ancres qui permettent de le fixer aux fonds marins. Les ancres ne sont pas représentées aux figures. Dans l'exemple illustré, deux câbles 15 sont fixés à chacun des flotteurs, et s'étendent vers le bas en s'éloignant radialement de la plateforme 8.

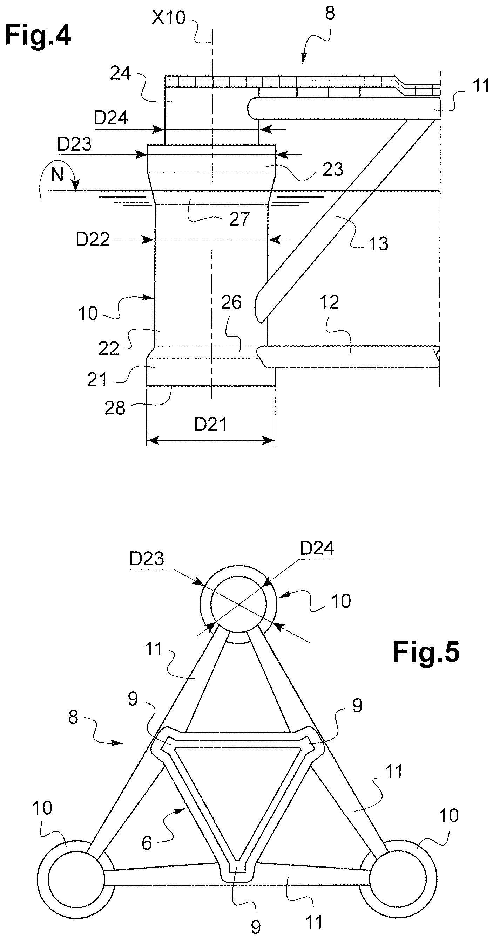

Comme particulièrement illustré à la figure 4, chaque flotteur 10 comprend, de bas en haut :
- un tronçon inférieur 21 ;
- un tronçon intermédiaire 22 ;
- un tronçon supérieur 23 ; et,
- une colonne 24.

Les entretoises supérieures 11 respectives sont fixées sur un flanc de la colonne 24. Les tronçons 21-23 et la colonne 24 sont cylindriques. Le tronçon intermédiaire 22 a un diamètre extérieur D22, mesuré horizontalement, inférieur au diamètre extérieur D21 du tronçon inférieur 21 et au diamètre extérieur D23 du tronçon supérieur 23. La colonne 24 a un diamètre extérieur D24 inférieur au diamètre D22 du tronçon intermédiaire. La partie supérieure de cette colonne est positionnée de telle sorte qu'un franc bord FB suffisant soit respecté par rapport aux pales 3. Dans l'exemple illustré, les diamètres D21, D23 des tronçons inférieurs et supérieurs 21, 23 sont sensiblement égaux entre eux.

Un premier raccord tronconique 26 relie le tronçon intermédiaire 22 au tronçon inférieur 21 ; son diamètre diminue en allant du tronçon inférieur 21 vers le tronçon intermédiaire 22. Le tronçon inférieur 21 est ainsi élargi par rapport au tronçon intermédiaire, de façon à donner plus de flottabilité lorsque la plateforme est à quai, sans augmenter le tirant d'eau. De préférence, il est en outre dimensionné de manière à ce que dans la houle, la pression multipliée par la surface de l'anneau supérieur constitué par la projection verticale du tronc de cône du premier raccord 26, soit sensiblement égale à la pression multipliée par la sous-face 28 du flotteur de façon à sensiblement annuler la force résultante verticale et donc à empêcher un pilonnement, c'est-à-dire un mouvement vertical du flotteur.

Un deuxième raccord tronconique 27 relie le tronçon intermédiaire 22 au tronçon supérieur 23 ; son diamètre diminue en allant du tronçon supérieur 22 vers le tronçon intermédiaire 22. La jonction entre le deuxième raccord 27 et le tronçon intermédiaire 22 est prévue, dans la position d'usage, pour constituer une ligne de flottaison pour le système 1. Ainsi, à partir du niveau N de l'eau, un élargissement en forme de tronc de cône est effectué jusqu'à un plus grand diamètre sur une certaine hauteur.

Le diamètre réduit du tronçon intermédiaire 22, relativement au tronçon supérieur 23, permet de réduire les efforts de houle. Cela permet, sous les efforts statiques horizontaux de donner un couple de redressement de plus en plus important lors de l'inclinaison de la plateforme, donc réduit son inclinaison sous l'effet du vent et des courants permettant une plus grande efficacité énergétique de l'éolienne. De plus, il a été constaté que le diamètre D23 du tronçon supérieur étant plus grand que celui du tronçon intermédiaire, cela permet de réduire le phénomène de roulis, de tangage et de pilonnement sous l'effet de la houle. La stabilité à la fois statique et dynamique de la plateforme en est donc améliorée.

Un autre avantage du système 1 selon l'invention porte sur le fait que l'éolienne 2 est centrée par rapport aux trois flotteurs 10 ne provoquant pas de dissymétrie. En effet, le pylône 6, construit en assemblage tubulaire tripode, est conçu de façon que le pied 9 de chacun de ses trois mâts 7 repose sur le milieu d'une entretoise supérieure 11 respective, reliant deux des trois flotteurs 10. La nacelle, c'est-à-dire la génératrice 4, et les pales 3 de l'éolienne peuvent fonctionner avec vent arrière.

Dans l'exemple illustré, l'éolienne 2, ses pales 3, sa turbine 4 et son pylône 6 représente un poids d'environ mille tonnes, dont le centre de gravité est très élevé au-dessus du niveau N de l'eau. C'est notamment la forme des flotteurs qui permet une plus grande stabilité de la plateforme 8 et de l'éolienne 2.

Bien sûr, l'invention n'est pas limitée aux exemples qui viennent d'être décrits. Au contraire, l'invention est définie par les revendications qui suivent.

Il apparaîtra en effet à l'homme de l'art que diverses modifications peuvent être apportées aux modes de réalisation décrits ci-dessus, à la lumière de l'enseignement qui vient de lui être divulgué.

Ainsi, le pylône en structure tubulaire peut être haubané par câbles allant du pylône sur les trois flotteurs.

A la différence du pylône décrit ci-dessus, le pylône peut comprendre un unique mât cylindrique supporté à sa base par un trépied, chacun des trois pieds du trépied reposant sur une entretoise supérieure respective, de sorte que le mât cylindrique est sensiblement centré relativement aux flotteurs.

L'intérêt d'un tel système est de pouvoir amener l'ensemble constitué par la plateforme et l'éolienne en remorquage sur le site final à partir d'un port pour éviter de couteux travaux d'installation en mer. Pour cela le tirant d'eau est limité et il a été vérifié que la stabilité est conforme aux règles pendant cette phase. Une fois sur place, chaque flotteur est relié à ses lignes de mouillage : câbles, chaînes, ancres qui auront été préinstallées et testées avant l'arrivée de la plateforme.

Une des difficultés est le montage du mât, de la nacelle et des pales ; ce sont des charges lourdes et volumineuses à installer sur une plateforme flottante. Cette difficulté est diminuée par l'invention. Grâce au système selon l'invention, cette phase peut être faite soit au port, soit sur un site plus profond et protégé de la houle, soit en pleine mer. L'utilisation d'une éolienne à deux pales permet, par exemple, en disposant les pales à l'horizontale, de poser l'ensemble pales et nacelle sur une barge puis de hisser cet ensemble, même en mer, en haut du mât. Le mât peut être érigé en plusieurs éléments, comme cela se fait pour les grues à tour ou les mâts de forage du type « bootstrap ». Ces solutions permettent d'éviter l'utilisation de grues flottantes de très grande capacité, très onéreuses, surtout en milieu offshore.

## Revendications

1. Système (1) d'éolienne flottante, comprenant une éolienne (2) montée sur une plateforme flottante (8), ladite plateforme comprenant trois flotteurs d'axe vertical (X10) respectif, chaque flotteur (10) comprenant un tronçon intermédiaire (22) de section horizontale (D22) de préférence sensiblement constante, le système d'éolienne flottante comprenant de préférence:
- un tronçon inférieur (21) de section horizontale (D21) sensiblement constante plus grande que la section (D22) dudit tronçon intermédiaire ; et,
- un premier raccord (26) reliant ledit tronçon intermédiaire (22) audit tronçon inférieur (21), sa section diminuant en allant, de bas en haut, du tronçon inférieur (21) vers le tronçon intermédiaire (22) ; le système d'éolienne flottante comprenant:
- un tronçon supérieur (23) de section horizontale (D23) sensiblement constante, plus grande que la section (D22) dudit tronçon intermédiaire (22) ; et,
- un deuxième raccord (27) reliant ledit tronçon intermédiaire (22) audit tronçon supérieur (23), sa section augmentant en allant, de bas en haut, du tronçon intermédiaire (22) vers le tronçon supérieur (23), ce deuxième raccord étant prévu pour être disposé au-dessus du niveau (N) de l'eau.

2. Système selon la revendication 1, **caractérisé en ce qu'**il est dimensionné de sorte que, en position d'usage, la force verticale résultant de la pression d'eau sur le premier raccord (27) est sensiblement égale à la force verticale résultant de la pression d'eau en sous-face du tronçon inférieur (21).

3. Système selon l'une des revendications 1 et 2, **caractérisé en ce qu'**une ligne de jonction entre le tronçon intermédiaire (22) et le deuxième raccord (26) est une ligne de flottaison pour le système 1.

4. Système selon l'une des revendications 1 à 3, **caractérisé en ce que** chaque flotteur est de révolution autour de son axe (X10).

5. Système selon l'une des revendications 1 à 4, **caractérisé en ce que** les flotteurs (10) sont sensiblement équidistants entre eux.

6. Système selon l'une des revendications 1 à 5, **caractérisé en ce que** les flotteurs (10) sont reliés deux à deux, dans leurs parties supérieures (24), par une entretoise supérieure (11), de préférence sensiblement horizontale.

7. Système selon la revendication 6, **caractérisé en ce que** chaque entretoise supérieure (11) est soutenue par deux étais (13), chacun desdits étais étant fixé par une première extrémité au voisinage du milieu de ladite entretoise et, par une deuxième extrémité, au flanc d'un flotteur (10) respectif.

8. Système selon l'une des revendications 1 à 7, **caractérisé en ce que** l'éolienne (2) comprend un pylône (6) supportant une génératrice (4), ledit pylône étant supporté par trois pieds (9) et comprenant de préférence trois mâts (7), chaque mât formant l'un desdits pieds.

9. Système selon les revendications 6 et 8, **caractérisé en ce que** chaque pied (9) repose sensiblement au milieu d'une entretoise supérieure (11) respective.

10. Système selon l'une des revendications 1 à 9, **caractérisé en ce que** l'éolienne (2) est bipale.

11. Système selon l'une des revendications 1 à 10, **caractérisé en ce que** les flotteurs sont en outre reliés deux à deux, dans leurs parties basses (21,26) par une entretoise inférieure (12) respective.

## Patentansprüche

1. Schwimmende Windenergieanlage (1), umfassend eine Windturbine (2), die auf einer schwimmenden Plattform (8) montiert ist, wobei die Plattform drei Schwimmkörper mit jeweils vertikaler Achse (X10) aufweist, wobei jeder Schwimmkörper (10) einen Zwischenabschnitt (22) mit einem vorzugsweise im Wesentlichen konstanten horizontalen Querschnitt (D22) hat, wobei die schwimmende Windenergieanlage vorzugsweise umfasst:
- einen unteren Abschnitt (21) mit einem im Wesentlichen konstanten Querschnitt (D21), der größer ist als der Querschnitt (D22) des Zwischenabschnitts; und
- eine erste Verbindung (26), die den Zwischenabschnitt (22) mit dem unteren Abschnitt (21) verbindet, wobei sich deren Querschnitt von dem unteren Abschnitt (21) in Richtung auf den Zwischenabschnitt (22) von unten nach oben verringert;
wobei die schwimmende Windenergieanlage umfasst:
- einen oberen Abschnitt (23) mit einem im Wesentlichen konstanten horizontalen Querschnitt (D23), der größer ist als der Querschnitt (D22) des Zwischenabschnitts (22); und
- eine zweite Verbindung (27), die den Zwischenabschnitt (22) mit dem oberen Abschnitt (23) verbindet, wobei sich deren Querschnitt von dem Zwischenabschnitt (22) in Richtung auf den oberen Abschnitt (23) von unten nach oben verringert, wobei die zweite Verbindung für eine Anordnung über dem Wasserspiegel (N) vorgesehen ist.

2. Anlage nach Anspruch 1, **dadurch gekennzeichnet, dass** diese derart dimensioniert ist, dass die vertikale Kraft, die sich aus dem Wasserdruck auf die erste Verbindung (27) ergibt, im Wesentlichen gleich der vertikalen Kraft ist, die sich aus dem Wasserdruck auf der Unterseite des unteren Abschnitts (21) ergibt.

3. Anlage nach einem der Ansprüche 1 und 2, **dadurch gekennzeichnet, dass** eine Verbindungslinie zwischen dem Zwischenabschnitt (22) und der zweiten Verbindung (26) eine Wasserlinie für die Anlage 1 ist.

4. Anlage nach einem der Ansprüche 1 bis 3, **dadurch gekennzeichnet, dass** jeder Schwimmkörper drehsymmetrisch um seine Achse (X10) ist.

5. Anlage nach einem der Ansprüche 1 bis 4, **dadurch gekennzeichnet, dass** die Schwimmkörper (10) im Wesentlichen abstandsgleich zueinander sind.

6. Anlage nach einem der Ansprüche 1 bis 5, **dadurch gekennzeichnet, dass** die Schwimmkörper (10) in ihren oberen Bereichen (24) durch eine vorzugsweise im Wesentlichen horizontale obere Strebe (11) paarweise verbunden sind.

7. Anlage nach Anspruch 6, **dadurch gekennzeichnet, dass** jede obere Strebe (11) von zwei Stützen (13) getragen wird, deren jede mit einem ersten Ende in der Nähe der Mitte der Strebe und mit einem zweiten Ende an der Seitenfläche eines jeweiligen Schwimmkörpers (10) befestigt ist.

8. System nach einem der Ansprüche 1 bis 7, **dadurch gekennzeichnet, dass** die Windturbine (2) einen Mast (6) hat, der einen Generator (4) trägt, wobei der Mast durch drei Füße (9) gestützt ist und vorzugsweise drei Pfosten (7) aufweist, wobei jeder Pfosten einen der Füße bildet.

9. Anlage nach den Ansprüchen 6 und 8, **dadurch gekennzeichnet, dass** sich jeder Fuß (9) im Wesentlichen in der Mitte einer jeweiligen oberen Strebe (11) abstützt.

10. Anlage nach einem der Ansprüche 1 bis 9, **dadurch gekennzeichnet, dass** die Windturbine (2) zwei Blätter hat.

11. Anlage nach einem der Ansprüche 1 bis 10, **dadurch gekennzeichnet, dass** die Schwimmkörper ferner in ihren unteren Bereichen (21, 26) durch eine jeweilige untere Strebe (12) paarweise verbunden sind.

## Claims

1. Floating wind turbine system (1), comprising a wind turbine (2) mounted on a floating platform (8), said platform comprising three floaters having a respective vertical axis (X10), each floater (10) comprising an intermediate section (22) having a preferably substantially constant horizontal cross-section (D22),
the floating wind turbine system preferably comprising:
- a lower section (21) having a substantially constant horizontal cross-section (D21) larger than the cross-section (D22) of said intermediate section; and
- a first connector (26) connecting said intermediate section (22) to said lower section (21), its cross-section decreasing when going, from bottom to top, from the lower section (21) towards the intermediate section (22);
the floating wind turbine system comprising:
- an upper section (23) having a substantially constant horizontal cross-section (D23), larger than the cross-section (D22) of said intermediate section (22); and
- a second connector (27) connecting said intermediate section (22) to said upper section (23), its cross-section increasing when going, from bottom to top, from the intermediate section (22) towards the upper section (23), this second connector being provided to be disposed above the level (N) of the water.

2. System according to claim 1, **characterised in that** it is dimensioned in such a way that, in a position of use, the vertical force resulting from the water pressure on the first connector (27) is substantially equal to the vertical force resulting from the water pressure at the underside of the lower section (21).

3. System according to one of claims 1 and 2, **characterised in that** a junction line between the intermediate section (22) and the second connector (26) is a water line for the system (1).

4. System according to one of claims 1 to 3, **characterised in that** each floater is of revolution about its axis (X10).

5. System according to one of claims 1 to 4, **characterised in that** the floaters (10) are substantially equidistant from each other.

6. System according to one of claims 1 to 5, **characterised in that** the floaters (10) are connected two by two, in their upper parts (24), by an upper spacer (11), preferably substantially horizontal.

7. System according to claim 6, **characterised in that** each upper spacer (11) is supported by two stays (13), each of said stays being fastened by a first end near the middle of said spacer and, by a second end, to the side of a respective floater (10).

8. System according to one of claims 1 to 7, **characterised in that** the wind turbine (2) comprises a pylon (6) supporting a generator (4), said pylon being supported by three legs (9) and preferably comprising three towers (7), each tower forming one of said legs.

9. System according to claims 6 and 8, **characterised in that** each leg (9) rests substantially in the middle of a respective upper spacer (11).

10. System according to one of claims 1 to 9, **characterised in that** the wind turbine (2) is two-bladed.

11. System according to one of claims 1 to 10, **characterised in that** the floaters are further connected two by two, in their lower parts (21, 26), by a respective lower spacer (12).
